# EUROPEAN PATENT SPECIFICATION

(11) **EP 2 682 421 B1**
(45) Date of publication and mention of the grant of the patent: **17.09.2014**
(21) Application number: 12175252.1
(22) Date of filing: 06.07.2012
(51) Int. Cl.: C08J 11/04, C08L 23/06

(54) **Method for producing reinforced hybrid composite polyethylene plastics**
Verfahren zur Herstellung von verstärktem Hybrid-Verbund-Polyethylenkunststoff
Procédé de production de matières plastiques en polyéthylène composite hybride renforcé

(43) Date of publication of application: 08.01.2014
(73) Proprietor: UrbanPlast, SIA, 1050 Riga (LV)
(72) Inventor: Zuzans, Janis, 1050 Riga (LV); Aspizs, Simons, 5400 Daugavpils (LV); Rats, Ivars, 3401 Liepaja (LV)
(74) Representative: Anohins, Vladimirs

(56) References cited:
- EP-A1- 1 070 782
- EP-A1- 1 275 699
- WO-A1-2011/130780

## Description

The present invention relates to the technology for producing reinforced hybrid composite polyethylene plastic with at least partial use of recycled materials, including multilayer packaging films made of various materials and containing layers of polyethylene, cellulose fibres and aluminium.

Processing of secondary polyethylene films is an important problem. It is more complicated technologically to process films of multilayer laminated packaging material made of polyethylene.

There is known in the art a method of recycling sandwich film (Patent EP2158182B1), in which a sandwich film is crushed, stratified and the layers are separated from each other. Then the layers are sorted and accumulated separately. Each layer is processed separately. However, this method is technically difficult, time-consuming and costly.

There is known in the art a method of joint recycling of polyethylene and aluminium (Von Zuben F., Neves F.L. RECYCLING OF ALUMINUM AND POLYETHYLENE PRESENT IN TETRA PAK PACKAGES, 1999, - Sao Paulo, Brazil -http://www.eko- paket.si/upload/file/Recikliranje%20alu%20in%20polietilena%20v%20TP%20emb alazi.pdf?phpMyAdmin=8f4aea4ea78343d51594e6196d6e3172) comprising the separation (elution) of the cellulose fibres from the multilayer fabric, washing and drying the remaining polyethylene and aluminium, polyethylene agglutination with aluminium, obtaining pellets from the composite material by extrusion. In all zones of the extruder, temperature regimes are used that are characteristic for the extrusion of polyethylene; a temperature of about 120°C is maintained in a zone I. The zone I or feeding zone works at a temperature of about 120°C, a zone II or compression zone works at a temperature of about 135°C to 140°C, and a zone III or homogenization zone works at a temperature of 150°C. The die of the extruder operates at a temperature of about 170°C.

However, this method is technically complicated and energy-intensive, and the authors themselves point out, in their article, on the need for complete removal of the cellulose fibres from the material, since the presence of cellulose fibres can lead to discontinuity of extrusion, and drying the material is required prior to the extrusion. In addition, this method does not enable to process the cellulose- or aluminium-based laminated films.

Known is a method of manufacturing composite polyethylene plastics reinforced with cellulose fibres or glass fibres (Patent US7743567). A particular embodiment of the method (Example No. 7) comprises mixing the dried pre-shredded cellulosic material (preferably wood) passed through the 20-150 (preferably 20-40) mesh sieve, with polyethylene and glass fibres and transverse cross-linking agent, and grinding the mixture in a compounder followed by injection moulding. This method is chosen as the closest prior art. The resulting composite polyethylene plastic reinforced with cellulose fibres and glass fibres has a sufficiently high strength commensurate with the strength of the wood products it replaces.

However, the known method is technically difficult and expensive, as both expensive transverse cross-linking agents are used, and it is needed to ensure a thorough drying of the cellulose fibres, and then use special equipment to store the dried cellulose fibres. In addition, this method does not enable to process recycled polyethylene, which is not separated from the aluminium.

A technical problem to be solved by the present invention is to simplify and reduce the cost of production of reinforced hybrid composite polyethylene plastics with at least partial use of secondary raw multilayer materials without separation of its layers.

According to the invention, the method of production of reinforced hybrid composite polyethylene plastics comprises the following operations:
- grinding the following starting materials: polyethylene, aluminium, cellulose fibres to the size of 3-5 mm;
- mixing and simultaneously grinding and heating to a temperature of 80-160°C, within 3-7 minutes, said starting materials (polyethylene, aluminium, and cellulose fibres) which are, at least in part, secondary materials, with a trigger additive that triggers a reaction of maleic anhydride grafting of polyethylene, with a thickener addition, glass fibres and drying agent, with the following amounts of the starting materials per 100 kg of the mixture, kg:

| | |
|---|---|
| aluminium - | 5-15; |
| cellulose fibres with the moisture content of 20-45% - | 5-30; |
| polyethylene - | 55-90; |

the trigger additive with a thickener addition, glass fibres and a drying agent being added in the following amounts per 100 kg of the mixture of starting materials, kg:

| | |
|---|---|
| the trigger additive with a thickener addition - | 1.4-3; |
| the glass fibres - | 1-7; |
| the drying agent - | 0.5-5, |

- extruding the prepared mixture in a twin-screw extruder, in the feed zone of which a temperature of 180-240°C is maintained for supporting the reaction of maleic anhydride grafting of polyethylene, with a temperature first lowered down to 20-25°C in the successive zones of the twin-screw extruder and then again raised to the temperature maintained in the feed zone to obtain reinforced hybrid composite polyethylene plastic;
- granulating the reinforced hybrid composite polyethylene plastic,
wherein the trigger additive that triggers a reaction of polyethylene grafting with maleic anhydride contains formic acid, maleic anhydride and an addition of a xanthan gum based thickening agent in the following ratios, wt. %:

| | |
|---|---|
| formic acid - | 5-12; |
| maleic anhydride - | 50-60; |
| addition of a thickening agent - | 30-40. |

The used proportions of the starting materials (polyethylene, aluminium, cellulose fibres) are determined experimentally. When the cellulose fibres are mixed-in in an amount of more than 30 kg per 100 kg of the mixture of starting materials (30 wt. %), this leads to the formation of defects in the finished product made of reinforced hybrid composite polyethylene plastic - the so-called "shark skin". Increase in the inclusion of aluminium in the mixture of starting materials above 15 wt. % leads to the clogging of extrusion nozzles of a moulding machine in the process of moulding of reinforced hybrid composite polyethylene plastics. Reduction of the content of cellulose fibres to less than 5 wt. % and aluminium to less than 5 wt. % would not be technologically and economically reasonable, as it would require rather thorough removal of excess cellulose fibres and aluminium out of the multilayer films. Glass fibres are added to achieve additional strength characteristics of the composite.

The trigger additive is selected so that it interacts with polyethylene during the extrusion changing its chemical structure, which results in a polyethylene grafted with maleic anhydride molecules. The grafting and combination of polyethylene by the present method are two combined stages occurring in the same twin-screw extruder, but in different zones.

The thickening agent addition is used to reduce the volatility of formic acid, elimination of odour and increase of the selectivity of chemical reactions. The trigger additive composition and temperature regimes in the twin-screw extruder are chosen so that the grafting reaction of maleic anhydride proceeds in the feed zone of the extruder, where the temperature is maintained at a level higher than the grafted polyethylene melting point. The result is polyethylene grafted with maleic anhydride molecules, which, due to the chemical structure, combines well with both polar and non-polar molecules, and thus provides a combination of polyethylene and aluminium, cellulose fibres and glass fibres. Due to the high temperature in the feed zone, polyethylene is also filled with glass fibres. Filling the polyethylene with cellulose fibres and aluminium takes place in the successive zones of the extruder. This facilitates the quality control of the technology process.

The drying agent opening and excess moisture binding in the cellulose fibres also takes place in the twin-screw extruder feed zone. A drying agent can be used, containing a mixture of calcium oxide and calcium stearate in linear low density polyethylene. It is particularly appropriate when the starting material is low density polyethylene. Mixing in the drying agent in amount of 0.5-5 kg per 100 kg of a mixture of starting materials would not affect the mechanical properties of the reinforced hybrid composite polyethylene plastic produced, therefore, there is no need in dosing it very exactly dependent on the moisture content.

The starting materials can be additionally mixed with polyethylene wax, which is added in an amount of 2-8 kg per 100 kg of a mixture of starting materials, this mixing being carried out simultaneously with the mixing with the trigger additive, glass fibres and drying agent. The polyethylene wax is added for better composition of the cellulose fibres and polyethylene because it is absorbed well by cellulose fibres.

The reinforced hybrid composite polyethylene plastic produced by the present method has good mechanical properties, does not absorb moisture and does not emit odours during processing.

The following are specific examples of implementation of the present method of production of reinforced hybrid composite polyethylene plastic, but are not the only possible.

### Example No. 1

Juice packing waste products consisting of cellulose fibres in an amount of 15 kg (with moisture content 35%), 5 kg of aluminium foil, and 80 kg of polyethylene film of complex composition based on low density polyethylene, is crushed into fragments of 3-5 mm. The resulting mixture of the starting materials is placed in an agglomerator, and an trigger additive is added that triggers the reaction of maleic anhydride grafting of polyethylene, which contains 150 g of formic acid, 800 g of maleic anhydride and 500 g of xanthan gum based thickening agent. 3 kg of crushed glass fibres with a particle size less than 5 mm, 5 kg of polyethylene wax, and 2 kg of drying agent that contains a mixture of calcium oxide and calcium stearate in linear low density polyethylene, are also placed in the agglomerator. All the ingredients are mixed and ground together and heated to a temperature of 130°C for 5 minutes. The prepared mixture is fed to a twin screw extruder, in the feed zone of which a temperature of 235°C is maintained to make the reaction of maleic anhydride grafting of polyethylene run; in the successive zones of the twin-screw extruder, the temperature is first lowered down to 20-25°C and then again raised to the temperature maintained in the feed zone. Granules of reinforced hybrid composite polyethylene plastic are formed by a conventional low-density polyethylene granulating device.

The reinforced hybrid composite polyethylene plastic produced by the present method has good mechanical properties, does not absorb moisture and does not emit odours during processing. We have established experimentally that the resulting reinforced hybrid composite polyethylene plastic has the following better strength properties as compared with LDPE:

| | Reinforced hybrid composite polyethylene plastic | LDPE |
|---|---|---|
| Breaking elongation (%) | 48 | 95 |
| Deformation at break, MPa | 16 | 11 |
| Young's Modulus, MPa | 200 | 95 |
| Impact strength | Not destroyed | Not destroyed |

### Example No. 2

Papermaking waste products consisting of cellulose fibres in an amount of 20 kg (with moisture content 28%), 5 kg of aluminium foil production waste, and 75 kg of polyethylene film of complex composition based on low density polyethylene, are crushed into fragments of 3-5 mm. The resulting mixture of said starting material is placed in an agglomerator, with an trigger additive added that triggers the reaction of maleic anhydride grafting of polyethylene, which contains 150 g of formic acid, 800 g of maleic anhydride and 500 g of xanthan gum based thickening agent. 3 kg of crushed glass fibres with a particle size less than 5 mm, 5 kg of polyethylene wax, and 2 kg of drying agent that contains a mixture of calcium oxide and calcium stearate in linear low density polyethylene, are also added to the agglomerator. All the ingredients are mixed and ground together and heated to a temperature of 130°C for 7 minutes. The prepared mixture is fed to a twin-screw extruder, in the feed zone of which a temperature of 238°C is maintained to make the reaction of maleic anhydride grafting of polyethylene run; in the successive zones of the twin-screw extruder, the temperature is first lowered down to 20-25°C and then again raised to the temperature maintained in the feed zone. Granules of reinforced hybrid composite polyethylene plastic are formed by a conventional low-density polyethylene granulating device.

### Example No. 3

Milk packing waste products consisting of cellulose fibres in an amount of 15 kg (with moisture content 34%), 9 kg of aluminium foil, and 76 kg of polyethylene film of complex composition based on low density polyethylene, are crushed into fragments of 3-5 mm. The resulting mixture is placed in an agglomerator of the starting materials, with an trigger additive added that triggers the reaction of maleic anhydride grafting of polyethylene, which contains 150 g of formic acid, 800 g of maleic anhydride and 500 g of xanthan gum based thickening agent. 3 kg of crushed glass fibres with a particle size less than 5 mm, 5 kg of polyethylene wax, and 2 kg of drying agent that contains a mixture of calcium oxide and calcium stearate in linear low density polyethylene, are also added to the agglomerator. All the ingredients are mixed and ground together and heated to a temperature of 130°C for 5 minutes. The prepared mixture is fed to a twin-screw extruder, in the feed zone of which a temperature of 230°C is maintained to make the reaction of maleic anhydride grafting of polyethylene run; in the successive zones of the twin-screw extruder, the temperature is first lowered down to 20-25°C and then again raised to the temperature maintained in the feed zone. Granules of reinforced hybrid composite polyethylene plastic are formed by a conventional low-density polyethylene granulating device.

The present invention makes it possible to simplify and cheapen the production of reinforced hybrid composite polyethylene plastic with at least partial use of recycled multilayer materials without separation of its layers. The reinforced hybrid composite polyethylene plastic produced by the present method has good mechanical properties so that the present method would be appropriate to use for co-processing of several types of secondary raw materials proportioning their amounts so that the ratio of the starting materials be in line with the ratio used in the present method.

## Claims

1. A method of production of reinforced hybrid composite polyethylene plastics comprising the following operations:
- grinding the following starting materials: polyethylene, aluminium, cellulose fibres to the size of 3-5 mm;
- mixing and simultaneously grinding and heating to a temperature of 80-160°C, within 3-7 minutes, said starting materials which are, at least in part, secondary materials, with a trigger additive that triggers a reaction of maleic anhydride grafting of polyethylene, with a thickener addition, glass fibres and drying agent, with the following amounts of the starting materials per 100 kg of the mixture, kg:
| | |
|---|---|
| aluminium - | 5-15; |
| cellulose fibres with the moisture content of 20-45% - | 5-30; |
| polyethylene - | 55-90; |
the trigger additive with a thickener addition, glass fibres and a drying agent being added in the following amounts per 100 kg of the mixture of starting materials, kg:
| | |
|---|---|
| the trigger additive with a thickener addition - | 1.4-3; |
| the glass fibres - | 1-7; |
| the drying agent - | 0.5-5, |
- extruding the prepared mixture in a twin-screw extruder, in the feed zone of which a temperature of 180-240°C is maintained for supporting the reaction of maleic anhydride grafting of polyethylene, with a temperature first lowered down to 20-25°C in the successive zones of the twin-screw extruder and then again raised to the temperature maintained in the feed zone to obtain reinforced hybrid composite polyethylene plastic;
- granulating the reinforced hybrid composite polyethylene plastic,
wherein the trigger additive that triggers a reaction of polyethylene grafting with maleic anhydride contains formic acid, maleic anhydride and an addition of a xanthan gum based thickening agent in the following ratios, wt. %:
| | |
|---|---|
| formic acid - | 5-12; |
| maleic anhydride - | 50-60; |
| addition of a thickening agent - | 30-40. |

2. The method according to Claim 1, wherein a drying agent is used that contains a mixture of calcium oxide and calcium stearate in linear low density polyethylene.

3. The method according to any of Claims 1 or 2, wherein starting materials are used that are further mixed with polyethylene wax, which is added in an amount of 2-8 kg per 100 kg of the mixture of the starting materials.

4. Reinforced hybrid composite polyethylene plastic produced by the method of any of Claims 1-3.

## Patentansprüche

1. Verfahren zur Herstellung von verstärkten Hybrid-Verbund-Polyethylenkunststoffen, das die folgenden Betriebsvorgänge umfasst:
- Mahlen der folgenden Ausgangsstoffe: Polyethylen, Aluminium, Cellulosefasern auf eine Größe von 3-5 mm;
- Mischen und gleichzeitiges Mahlen und Erhitzen der Ausgangsstoffe, die mindestens teilweise Sekundärstoffe sind, innerhalb von 3-7 Minuten auf eine Temperatur von 80-160°C, mit einem Auslösezusatzstoff, der eine Maleinsäureanhydrid-Graftreaktion von Polyethylen auslöst, mit einem Verdickungsmittelzusatz, Glasfasern und Trockenmittel, mit den folgenden Mengen der Ausgangsstoffe pro 100 kg des Gemischs, kg:
| | |
|---|---|
| Aluminium - | 5-15; |
| Cellulosefasern mit 20-45%igem Feuchtigkeitsgehalt - | 5-30; |
| Polyethylen - | 55-90; |
wobei der Auslösezusatzstoff mit einem Verdickungsmittelzusatz, Glasfasern und Trockenmittel in den folgenden Mengen pro 100 kg des Ausgangsstoffgemischs, kg, zugegeben werden:
| | |
|---|---|
| der Auslösezusatz mit einem Verdickungsmittelzusatz - | 1,4-3; |
| die Glasfasern - | 1-7; |
| das Trockenmittel - | 0,5-5, |
- Extrudieren des zubereiteten Gemischs in einem Zweischneckenextruder, in dessen Einzugszone eine Temperatur von 180-240°C aufrechterhalten wird, um die Maleinsäureanhydrid-Graftreaktion von Polyethylen zu unterstützen, wobei eine Temperatur zuerst auf 20-25°C in den aufeinanderfolgenden Zonen des Zweischneckenextruders abgesenkt wird und dann wieder auf die in der Einzugszone aufrechterhaltene Temperatur angehoben wird, um verstärkten Hybrid-Verbund-Polyethylenkunststoff zu erhalten;
- Granulieren des verstärkten Hybrid-Verbund-Polyethylenkunststoffs,
wobei der Auslösezusatzstoff, der eine Polyethylen-Graftreaktion mit Maleinsäureanhydrid auslöst, Ameisensäure, Maleinsäureanhydrid und einen Verdickungsmittelzusatz auf Xanthangrundlage in dem folgenden Verhältnis enthält, Gew.-%:
| | |
|---|---|
| Ameisensäure - | 5-12; |
| Maleinsäureanhydrid - | 50-60; |
| Verdickungsmittelzusatz - | 30-40. |

2. Verfahren gemäß Anspruch 1, wobei ein Trockenmittel verwendet wird, das ein Gemisch von Calciumoxid und Calciumstearat in linearem Polyethylen niedriger Dichte enthält.

3. Verfahren gemäß einem der Ansprüche 1 oder 2, wobei Ausgangsstoffe verwendet werden, die ferner mit Polyethylenwachs gemischt werden, das in einer Menge von 2-8 kg pro 100 kg des Ausgangsstoffgemischs zugesetzt wird.

4. Verstärkter Hybrid-Verbund-Polyethylenkunststoff, der durch das Verfahren gemäß einem der Ansprüche 1-3 hergestellt wird.

## Revendications

1. Procédé de production d'une matière plastique à base de polyéthylène composite hybride renforcée, comprenant les étapes consistant à :
- broyer les matériaux de départ suivants : polyéthylène, aluminium, fibres cellulosiques à la taille de 3-5 mm ;
- mélanger et broyer et chauffer simultanément à une température de 80 à 160 °C, dans les 3 à 7 minutes, lesdits matériaux de départ qui sont, en moins en partie, des matériaux secondaires, avec un additif déclencheur qui déclenche une réaction de greffe d'anhydride maléique du polyéthylène, avec l'addition d'un épaississant, des fibres de verre et un agent siccatif, avec les quantités suivantes en kg des matériaux de départ par 100 kg du mélange :
| | |
|---|---|
| aluminium | 5-15 ; |
| fibres cellulosiques avec une teneur en humidité de 20 à 45 % | 5-30 ; |
| polyéthylène | 55-90 ; |
l'additif déclencheur avec l'addition d'épaississant, les fibres de verre et un agent siccatif étant ajoutés dans les quantités suivantes en kg par 100 kg du mélange de matériaux de départ :
l'additif déclencheur avec une addition
| | |
|---|---|
| d'épaississant | 1,4-3 ; |
| les fibres de verre | 1-7 ; |
| l'agent siccatif | 0,5-5 ; |
- extruder le mélange préparé dans une extrudeuse à vis jumelées, dans la zone d'alimentation de laquelle une température de 180 à 240 °C est maintenue pour supporter la réaction de la greffe d'anhydride maléique de polyéthylène, avec une température d'abord abaissée dans les zones successives de l'extrudeuse à vis jumelées, puis à nouveau relevée à la température maintenue dans la zone d'alimentation pour obtenir une matière plastique à base de polyéthylène composite hybride renforcée ;
- granuler la matière plastique à base de polyéthylène composite hybride renforcée,
dans lequel l'additif déclencheur qui déclenche une réaction de greffe du polyéthylène avec de l'anhydride maléique contient de l'acide formique, de l'anhydride maléique et une addition d'agent épaississant à base de gomme xanthane dans les rapports suivants en % en poids :
| | |
|---|---|
| acide formique | 5-12 ; |
| anhydride maléique | 50-60 ; |
| addition d'agent épaississant | 30-40. |

2. Procédé selon la revendication 1, dans lequel on utilise un agent siccatif qui contient un mélange d'oxyde de calcium et de stéarate de calcium dans du polyéthylène linéaire de faible densité.

3. Procédé selon l'une quelconque des revendications 1 ou 2, dans lequel on utilise des matériaux de départ qui sont encore mélangés à de la cire de polyéthylène, qui est ajoutée en quantité de 2 à 8 kg par 100 kg du mélange des matériaux de départ.

4. Matière plastique à base de polyéthylène composite hybride renforcée produite par le procédé selon l'une quelconque des revendications 1 à 3.
